# NEUE EUROPÄISCHE PATENTSCHRIFT

(11) **EP 0 393 320 B2**
(45) Veröffentlichungstag und Bekanntmachung des Hinweises auf die Entscheidung über den Einspruch: **29.05.1996**
(45) Hinweis auf die Patenterteilung: 08.12.1993
(21) Anmeldenummer: 90102724.3
(22) Anmeldetag: 12.02.1990
(51) Int. Cl.: B43K 8/04, B43K 8/18, B43K 5/18, B43K 7/10, G01D 15/16

(54) **Versorgungssystem für mit Hilfe von Kapillarkräften arbeitende Geräte zum Auftragen von Flüssigkeiten**
Feeding system for capillary liquid applicators
Système d'alimentation pour distributeurs de liquides capillaires

(30) Priorität: 15.04.1989 DE 3912411
(43) Veröffentlichungstag der Anmeldung: 24.10.1990
(73) Patentinhaber: DATAPRINT DATENDRUCKSYSTEME R. KAUFMAN KG, D-22587 Hamburg (DE)
(72) Erfinder: Kaufmann, Rainer, D-2000 Hamburg 55 (DE)
(74) Vertreter: Barske, Heiko, Dr. rer. nat.

(56) Entgegenhaltungen:
- EP-A- 0 373 302
- DE-A- 3 544 328
- DE-C- 822 364
- FR-A- 1 060 105
- FR-A- 1 063 299
- FR-E- 63 333
- JP-U- 5 486 433
- JP-U- 5 716 385
- US-A- 4 791 438

## Beschreibung

Die Erfindung betrifft ein Versorgungssystem für mit Hilfe von Kapillarkräften arbeitende Schreib- und Zeichengeräte zum Auftragen von Flüssigkeiten, umfassend eine Mehrzahl von gegenüber der Atmosphäre geschlossenen Behältern, die jeweils eine Einlaßöffnung und eine Auslaßöffnung aufweisen, zur Aufnahme der Schreib- und Zeichenflüssigkeit, wobei die Behälter in einer Reihenschaltung über die an einem Behälter ausgebildete Auslaßöffnung mit der an einem folgenden Behälter ausgebildeten Einlaßöffnung in Verbindung stehen, ein mit dem letzten Behälter der Reihenschaltung über eine Zuführeinrichtung verbundenes, für den Auftrag der Flüssigkeit geeignetes Auftragselement, wie eine Schreib- oder Zeichenspitze, welches Auftragselement ohne weitere Hilfsmittel dann und nur dann Flüssigkeit auf einen Aufzeichnungsträger aufträgt, wenn es in Kontakt mit diesem gebracht wird und eine Bewegung relativ zu diesem ausführt und welches Auftragselement eine Austrittsöffnung aufweist und einen mit dem ersten Behälter der Reihenschaltung verbundenen Lufteinlaß, und daß die Einlaßöffnungen und die Auslaßöffnungen kapillar ausgebildet sind, wobei die Kapillarität der Einlaßöffnungen und der Auslaßöffnungen größer als die der Behälter im Bereich der Einlaßöffnungen und der Auslaßöffnungen und kleiner als die der Austrittsöffnung des Auftragselements ist.

Ein Versorgungssystem dieser Art ist bekannt (FR-A-1 060 105).

Bei den vorgenannten Geräten müssen Vorkehrungen getroffen werden, um die Flüssigkeit nur zum Zeitpunkt des gewünschten Auftrags und auch nur in der gewünschten Menge aus der dafür vorgesehenen Austrittsöffnung des Auftragselements ausfließen zu lassen, nicht aber sonst durch die Schwerkraft.

Technische Lösungen für derartige Anforderungen sind bekannt. Beispielsweise wird bei Schreibgeräten häufig die Flüssigkeit vollständig kapillar gespeichert, wobei das Schreiben dadurch ermöglicht wird, daß die Haftung der Flüssigkeit auf der Unterlage und die Zerreißfestigkeit des Flüssigkeitsfadens größer ist als die der kapillaren Haltekräfte der Flüssigkeit im Kapillarspeicher. Dabei müssen die kapillaren Haltekräfte jedoch größer sein als die Schwerkraft der gespeicherten Flüssigkeit, was nur mit sehr hoher Kapillarität erreicht werden kann, wenn man davon ausgeht, daß zur Erzielung einer großen Schreibleistung der innere Hohlraum des Schreibgerätes in seiner vollen Kapazität genutzt werden soll. Die hohe Kapillarität des Speichers bedeutet jedoch eine starke Einschränkung bei der Auswahl der Schreibspitzen, da diese gegenüber dem Speicher eine noch höhere Kapillarität besitzen müssen, um eine einwandfreie Funktion des Gerätes während des Schreib-, Zeichen-, Mal- oder Druckbetriebs oder dergleichen zu gewährleisten.

Schreibspitzen mit hoher Kapillarität sind, abgesehen von Kugelrollspitzen, aus den verschiedensten Gründen zur Zeit wegen mangelnder Abriebfestigkeit für größere Schreiblängen nicht geeignet.

Ein weiterer Nachteil der vorgenannten Art des bekannten Speichersystems liegt auch darin, daß wegen des fertigungsbedingten ungleichen Aufbaus der Speicher nicht die gesamte Menge der Schreibflüssigkeit aus- bzw. abgeschrieben werden kann mit der nachteiligen Folge, daß die Strichintensität bei fortschreitender Entleerung des Speichers abnimmt.

Das aus der eingangs genannten FR-A-1 060 105 bekannte Schreibgerät weist zur Aufnahme einer Schreib- und Zeichenflüssigkeit eine Mehrzahl von Behältern auf, die nicht-kapillar sind, aber voneinander durch kapillare Verengungen getrennt werden. Die von den großen nichtkapillaren Querschnitten aufgenommene Tinte kann daraus grundsätzlich herauslaufen, was jedoch dort nicht erfolgt, wenn der Querschnitt an bestimmten Stellen kapillar ausgebildet ist.

Eine andere bekannte Möglichkeit, Flüssigkeiten oberhalb einer Austrittsöffnung eines Auftragselements ohne selbsttätiges Auslaufen zu halten wird dadurch erreicht, daß die Auftragsflüssigkeit mittels Unterdrucks und der Kapillarität einer Lufteintrittsöffnung in einem geschlossenen Behälter gehalten wird. Die Kapillarität der Lufteintrittsöffnung muß dabei so gewählt sein, daß mindestens die Flüssigkeitssäule gehalten werden kann, die von der Lufteintrittsöffnung bis zur Öffnung des Auftragselements reicht. In der Praxis sind bei dieser Anordnung wesentlich geringere Kapillaritäten realisierbar als bei dem vorher beschriebenen Kapillarspeichersystem. Dementsprechend niedriger kann auch die Kapillarität der Schreibspitze gewählt werden, wie sie z.B. bei Füllfederhaltern und Tuschezeichengeräten benötigt wird.

Nachteilig wirkt sich bei dieser Art der Flüssigkeitsaufbewahrung aus, daß mit zunehmender Entleerung des Behälters die die Flüssigkeit ersetzende Luft sich bei Luftdruckerniedrigung oder Temperaturerhöhung ausdehnt und somit Teile der Flüssigkeit aus dem Behälter austreten. Um ein Austropfen aus dem Gerät zu verhindern, wird die aus dem Behälter ausgetretene Flüssigkeit in eigens dafür vorgesehenen Kapillarspeichern aufgefangen. Erniedrigt sich anschließend wieder die Temperatur, so muß die Flüssigkeit wieder möglichst vollständig aus dem Kapillarspeicher in den geschlossenen Behälter zurückgesaugt werden, da andernfalls nach mehreren Temperaturschwankungen der Kapillarspeicher überlaufen würde. Die Zuverlässigkeit dieses Systems nimmt dabei ab, je größer das Behältervolumen ausgelegt ist.

Aus der DE-C-822 364 ist ein Kugelschreiber bekannt, der einen Großraum besitzt, dessen einzelne Teile einen so geringen Querschnitt haben, daß eine ausreichende Kapillarwirkung entsteht. Das heißt, daß in allen Teilräumen des dortigen Großraums eine gleichgroße Kapillarität vorherrscht.

Es ist somit Aufgabe der vorliegenden Erfindung, ein Versorgungssystem der eingangs genannten Art zu schaffen, das einerseits in der Lage ist, sehr große Schreibmittelvolumen aufzunehmen, das andererseits von Temperatur- und Luftdruckschwankungen, wie sie bei normalem Betrieb erwartet werden können, praktisch unabhängig ist, und das es gestattet, Schreib-, Zeichen-, Mal- und Druckgeräte oder dergl. lediglich an der Schreib-, Zeichen-, Mal- und Druckspitze oder dergl. insgesamt kostengünstig mit abriebfestem Material auszubilden, und ein Versorgungssystem zu schaffen, das eine völlige Entleerung des Schreibmittels aus dem Schreibmittelbehälter ermöglicht und ein Austropfen des Schreibmittels aus dem damit ausgerüsteten Gerät verhindert.

Gelöst wird die Aufgabe gemäß der Erfindung dadurch, daß die Einlaßöffnungen und die Auslaßöffnungen der Behälter im unteren Bereich jedes Behälters, bezogen auf die Betriebsstellung des Gerätes, angeordnet sind.

Dadurch wird vorteilhafterweise erreicht, daß die Behälter im Betrieb bei Abgabe von Flüssigkeit sich über das dafür vorgesehene Auftragselement automatisch nacheinander, beginnend mit dem mit der Luft verbundenen ersten Behälter, der Reihe der Behälter entleeren und daß einmal entleerte Behälter mit der Luft in Verbindung stehen und damit die Ausdehnung der Luft in den entleerten Behältern keinen Einfluß auf die Funktion des damit ausgerüsteten Gerätes ausüben. Temperatur- und Luftdruckschwankungen wirken sich nur auf denjenigen Behälter aus, der gerade nur teilweise gefüllt ist. Dadurch wird mit dem erfindungsgemäßen Versorgungssystem, wie angestrebt, die Sicherheit gegen unkontrolliertes Auslaufen der Flüssigkeit im Verhältnis zu einem Ein-Behälter-System mit gleichem Gesamtvolumen um den Faktor der Anzahl der Behälter des erfindungsgemäßen Versorgungssystems erhöht, d.h. beispielsweise bei vier vorgesehenen Behältern, um den Faktor 4.

Das in einem nach dem anderen der Behälter stattfindende Entleeren bei Abgabe von Flüssigkeit während des Betriebes wird dadurch erreicht, daß die Kapillarität der Einlaß- und Auslaßöffnungen größer als die der Behälter in diesem Bereich ist, wobei aus Gründen der Übersichtlichkeit nachfolgend davon ausgegangen wird, daß die Einlaß- und Auslaßöffnungen gleiche Kapillarität besitzen. Grundsätzlich kann die Kapillarität der Einlaß- und Auslaßöffnungen jedoch auch unterschiedlich ausgelegt sein. Eine Luftblase, die an der Einlaßöffnung eines Behälters durch Flüssigkeitsabgabe über die Auslaßöffnung entsteht, findet wegen der geringeren Kapillarität des Behälters in diesem Bereich einen Raum vor, der es der Luftblase gestattet, einen größeren Durchmesser aufzunehmen, als ihn die Auslaßöffnung besitzt. Dadurch kann unter Wirkung der Oberflächenspannung der die Luftblase umschließenden Flüssigkeit die Luftblase nicht mehr ohne Zwang in die Auslaßöffnung eintreten.

Durch die Anordnung der Einlaß- und Auslaßöffnungen der Behälter im unteren Bereich der Behälter, bezogen auf die Betriebsstellung des Gerätes, wird weiterhin vorteilhafterweise erreicht, daß die Kapillarität der Einlaßöffnungen und letztlich damit auch die Kapillarität der Austrittsöffnungen der Auftragselemente niedrig ausgelegt werden können. Die Kapillarität der Einlaßöffnungen muß nur so hoch sein, daß die Flüssigkeitssäule, ausgehend vom Niveau der Austrittsöffnung des Auftragselements, bis zur maximalen Höhe der Einlaßöffnungen darüber gehalten werden kann.

Ein Zwang könnte dann eintreten, wenn die Luftblase die Auslaßöffnung in einem ungünstigen Fall voll verschließt. Um dieses zu vermeiden, ist erfindungsgemäß vorwiegend in Behältern, deren Durchmesser nur wenige Millimeter und weniger beträgt, vorteilhafterweise eine Rinne angeordnet, die den Behälter vorzugsweise bis zur Auslaßöffnung durchquert. Die kapillare Rinne hat dabei vorteilhafterweise eine Kapillarität, die größer ist als die des Behälters.

Vorzugsweise entspricht die Kapillarität der kapillaren Rinne der der Einlaßöffnungen und Auslaßöffnungen. Dadurch ist sichergestellt, daß die Luftblase auch in die kapillare Rinne nicht von selbst eintreten kann, wodurch der Fluß durch die Rinne in die Auslaßöffnung hinein nicht unterbrochen werden kann. Ebenso verhindert die erfindungsgemäße kapillare Rinne im Behälter, daß eine den Behälterquerschnitt ausfüllende Luftblase das Nachfließen aus dem über der Luftblase liegenden Bereich des Behälters unterbricht.

Wesentlich für die Funktion des Versorgungssystems ist auch, daß die Kapillaritäten der Einlaßöffnungen und der Auslaßöffnungen der Behälter geringer als die der Austrittsöffnung des Auftragselements sind. Dadurch wird sichergestellt, daß die aufzutragende Flüssigkeit an der Austrittsöffnung des Auftragselements auch dann verbleibt, wenn, bedingt durch Temperatur- und Luftdruckschwankungen, der Unterdruck in dem nur teilweise gefüllten Behälter ansteigt und eine Tendenz entsteht, die Flüssigkeit zurückzusaugen. Statt dessen wird Luft durch die Einlaßöffnung des Behälters wegen ihrer geringeren Kapillarität angesaugt. Ebenso verhindert die geringere Kapillarität der Einlaß- und Auslaßöffnungen der Behälter gegenüber der Austrittsöffnung des Auftragselements, daß Flüssigkeit aus der Austrittsöffnung des Auftragselements austritt, wenn Luft sich in dem nur teilweise gefüllten Behälter ausdehnt. Statt dessen wird die überschüssige Flüssigkeit durch die Einlaßöffnung des Behälters und dann durch alle Auslaß- und Einlaßöffnungen der vorgeschalteten, bereits geleerten Behälter hindurch bis in die Luftzuführungsleitung hineinfließen.

Die Luftzuführungsleitung zu einem ersten Behälter der Mehrzahl der Behälter ist vorzugsweise mit einem kapillaren Speicher verbunden, der so bemessen ist, daß er die durch Temperatur- und Luftdruckschwankungen aus dem nur teilweise gefüllten ersten Behälter austretende Flüssigkeitsmenge aufnehmen kann.

Als zusätzliche Sicherheit können vorteilhafterweise noch kapillare Speicher dienen, die zwischen die Behälter zwischen die jeweiligen Einlaß- und Auslaßöffnungen geschaltet sind.

Vorteilhafterweise sind die Behälter axial rohrförmig, bezogen auf die Betriebsstellung des Gerätes, nebeneinander angeordnet. Hierdurch ergeben sich insbesondere beim Einbringen der Flüssigkeit in die Behälter einfache Verhältnisse, indem alle Behälter gleichzeitig durch einen Mehrfachdüsenkopf gefüllt werden können. Außerdem wird dadurch die Möglichkeit geschaffen, die Einlaß- und Auslaßöffnungen alle in etwa in gleicher Höhe, bezogen auf die Betriebsstellung des Gerätes, und möglichst niedrig gegenüber der Austrittsöffnung des Auftragselements anzuordnen.

Die Verbindung zwischen dem sich zuletzt entleerenden Behälter der Reihenschaltung der Behälter und dem Auftragselement wird durch eine Zuführeinrichtung hergestellt. Vorteilhafterweise weist die Zuführeinrichtung eine den Flüssigkeitsdurchlauf begrenzende Einrichtung auf. Diese kann zusätzlich zu den beschriebenen Kapillarkräften auch noch dazu genutzt werden, ein unerwünschtes Austropfen aus der Austrittsöffnung des Auftragselements zu verhindern.

In die gleiche Richtung wirkt vorteilhafterweise ein mit der Zuführeinrichtung verbundener kapillarer Speicher, indem er überschüssige Flüssigkeit aufnehmen kann. Die gespeicherte Flüssigkeit wird während des Betriebes bevorzugt verbraucht, so daß der Speicher die ihm zugedachte Funktion ständig wahrnehmen kann.

Die den Flüssigkeitsdurchfluß begrenzende Einrichtung kann in bestimmten Fällen auch vorteilhafterweise ein Ventil sein, das mechanisch oder elektrisch gesteuert immer dann den Durchfluß unterbindet, wenn ein Flüssigkeitsaustritt aus der Austrittsöffnung des Auftragselements nicht gewünscht wird. Vorteilhafterweise sind die Behälter, wie schon erwähnt, axial in Form von Segmenten eines Kreises oder eines Vielecks angeordnet, wodurch vorteilhafterweise eine kompakte Anordnung bei für alle Behälter übereinstimmendem Volumen und Abmessungen erreicht wird.

Schließlich werden vorteilhafterweise die Verbindungen zwischen den Behältern, die Luftleitungen, die kapillaren Speicher und ggf. die Zuführeinrichtung durch einen einzigen, die Behälter verschließenden Stopfen realisiert, so daß das erfindungsgemäße Versorgungssystem im wesentlichen nur noch aus drei Teilen besteht, nämlich einem einstückigen Mehrfachbehälter, dem beschriebenen Stopfen und einem üblichen Auftragselement. Diese Ausführungsform erleichtert auch die Montage und die Füllung der Flüssigkeit und ist verhältnismäßig kostengünstig herstellbar.

Die Erfindung wird nun nachfolgend unter Bezugnahme auf die schematischen Zeichnungen anhand eines Ausführungsbeispieles eingehend beschrieben. Darin zeigen:
Fig. 1 den grundsätzlichen Aufbau eines aus vier Behältern bestehenden Versorgungssystems,
Fig. 2 ein gegenüber der Darstellung von Fig. 1 modifiziertes Versorgungssystem,
Fig. 3 eine Darstellung eines Schreibgeräts in teilweisem Schnitt, in dem das Versorgungssystem Anwendung findet,
Fig. 4 einen Schnitt entlang der Linie A - B von Fig. 3 und
Fig. 5 einen Schnitt entlang der Linie C - D von Fig. 3 in der Ansicht von oben.

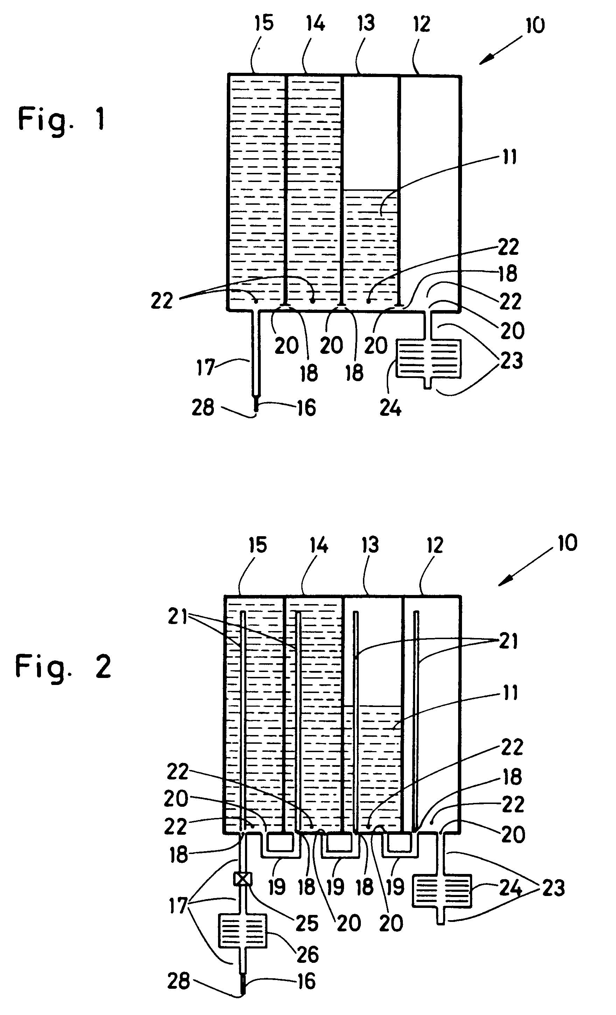

Das Versorgungssystem 10 vgl. insbesondere Fig. 1, besteht aus einer Mehrzahl von Behältern 12, 13, 14, 15, die funktionell nach Art einer Reihenschaltung hintereinander geschaltet sind. Die Behälter 12, 13, 14, 15 dienen zur Aufnahme der Flüssigkeit 11, die das Schreibmittel darstellt. Es sei bemerkt, daß die Behälter 12, 13, 14, 15, wie sie in Fig. 1 dargestellt sind, lediglich aus Darstellungsgründen den hier abgebildeten Aufbau zeigen. Grundsätzlich können die Behälter 12, 13, 14, 15 auf beliebige Weise entsprechend ihrem Einsatz in Schreib-, Zeichen-, Mal- und Druckgeräten oder dergleichen ausgebildet sein. Während des Betriebes ist das Versorgungssystem 10 im wesentlichen vertikal angeordnet, d.h. die (hier) rohrförmigen Behälter 12, 13, 14, 15 stehen ebenfalls vertikal. Bei den dargestellten Behältern 12, 13, 14, 15 sind jeweils pro Behälter eine Auslaßöffnung 18 und eine Einlaßöffnung 20 im unteren Teil des Behälters vorhanden, wobei jeweils die Auslaßöffnung 18 des einen Behälters mit der Einlaßöffnung 20 des nächsten Behälters verbunden ist.

Die Kapillarität der Einlaßöffnungen 18 und der Auslaßöffnungen 20 ist größer als die Kapillarität des Behälterraumes 22 im Bereich der Einlaßöffnungen 20 und der Auslaßöffnungen 18. Dadurch wird im Normalfall erreicht, daß Luftblasen, die durch Entnahme von Flüssigkeit 11 beim Betrieb durch die Einlaßöffnung 20 eines Behälters 12, 13, 14, 15 eintreten, nicht durch die Austrittsöffnung 18 hindurch gelangen, solange sich noch Flüssigkeit 11 in dem betreffenden Behälter 12, 13, 14, 15 befindet.

An den ersten Behälter 12 der Mehrzahl der dargestellten Behälter ist eine Luftleitung 23 über die Einlaßöffnung 20 angeschlossen. Die Luftleitung 23 hat Verbindung mit einem kapillaren Speicher 24. Der kapillare Speicher 24 ist mit der Atmosphäre, ggf. über die über den kapillaren Speicher 24 hinaus verlängerte Luftleitung 23 verbunden. Der letzte Behälter 15 der Mehrzahl der Behälter, der sich beim Verbrauch der Flüssigkeit 11 am letzten leert ist über eine Zuführeinrichtung 17 mit dem Auftragselement 16 verbunden. Das Auftragselement 16 besitzt eine Austrittsöffnung 28 für die Flüssigkeit 11. Die Kapillarität der Einlaßöffnungen 20 und der Auslaßöffnungen 18 der Behälter 12, 13, 14, 15 ist geringer als die der Austrittsöffnung 28 des Auftragselements 16. Dadurch wird erreicht, daß bei Erwärmung der Luft über die Flüssigkeit 11 des teilweise gefüllten Behälter 12, 13, 14, 15, in diesem Fall Behälter 13, die überschüssige Flüssigkeit 11 durch die Einlaßöffnung 20 des Behälters 13 hindurch über die Auslaßöffnung 18 und Einlaßöffnung 20 des Behälters 12 sowie über die Luftleitung 23 in den kapillaren Speicher 24 gelangt und nicht durch die Austrittsöffnung 28 ausläuft.

Fig. 2 unterscheidet sich von Fig. 1 dadurch, daß die Behälter 12, 13, 14, 15 von einer kapillaren Rinne durchzogen sind und daß die Zuführeinrichtung 17 eine den Durchfluß begrenzende Einrichtung 25 enthält und an einen Kapillarspeicher 26 angeschlossen ist. Des weiteren sind hier die Einlaßöffnungen 20 und die Auslaßöffnungen 18 der jeweils miteinander verbundenen Behälter 12, 13, 14, 15 über eine gesonderte Verbindungsleitung miteinander verbunden.

Die kapillare Rinne 21, deren Kapillarität im Normalfall der der Einlaßöffnungen 18 und Auslaßöffnungen 20 in etwa entspricht, sorgt zusammen mit den übrigen erfindungsgemäßen Kapillaritätsverhältnissen für einen unterbrechungsfreien Transport der Flüssigkeit 11 innerhalb der Behälter 12, 13, 14, 15, da sich bildende Luftblasen dort nicht eintreten können.

Die den Durchfluß begrenzende Einrichtung 25 kann beispielsweise so dimensioniert sein, daß pro Zeiteinheit nicht mehr Flüssigkeit 11 hindurchtritt als im üblichen Betrieb benötigt wird. Dadurch kann ein plötzlich austretender Überschuß an Flüssigkeit 11, wie er durch Stoß oder übermäßige Hitze auftreten kann, an der Zuführeinrichtung 17 abgefangen werden. Die den Durchfluß begrenzende Einrichtung 25 kann beispielsweise auch ein Ventil sein, das mechanisch oder elektrisch so gesteuert wird, daß Flüssigkeit 11 nur während eines gewünschten Betriebes austreten kann. Der ebenfalls an die Zuführeinrichtung 17 angeschlossene kapillare Speicher 26 hat die Funktion, überschüssige Flüssigkeit 11 aufzunehmen und während des Betriebes wieder abzugeben.

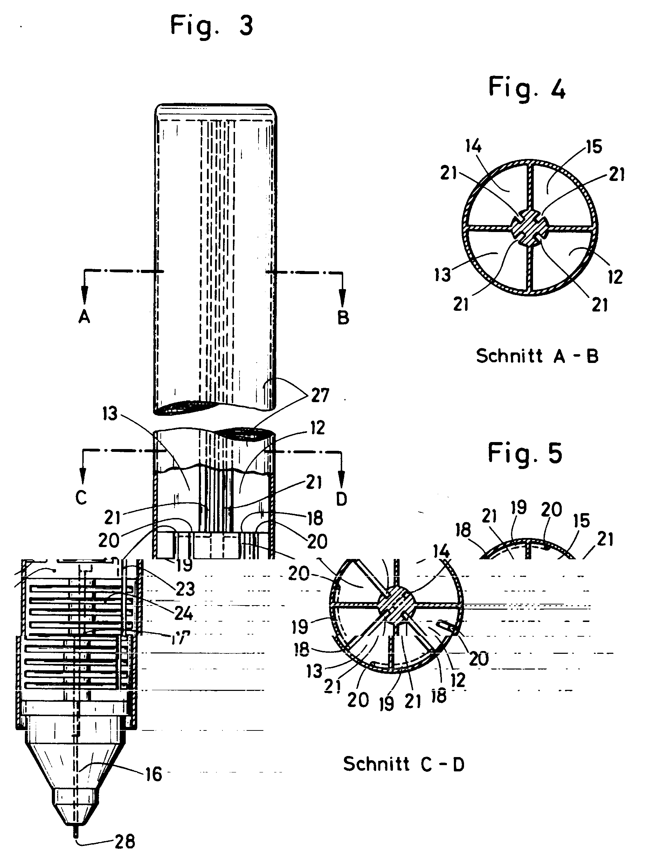

Die Figuren 3, 4 und 5 zeigen in verschiedenen Ansichten ein in ein Schreib-, Zeichen-, Mal - und Druckgerät 27 oder dergleichen eingesetztes Versorgungssystem 10 mit axial kreissegmentförmiger Anordnung der Behälter 12, 13, 14, 15 sowie einen die Behälter 12, 13, 14, 15 abschließenden Stopfen 29, in dem die Verbindungen bzw. Verbindungsleitungen 19 zwischen den Auslaßöffnungen 18 und Einlaßöffnungen 20, die Luftleitung 23, der Kapillarspeicher 24 sowie die Zuführeinrichtung 17 ausgebildet werden können. Die Zuführeinrichtung 17 versorgt ein Auftragselement 16 mit Flüssigkeit 11, die über die Austrittsöffnung 28 abgegeben wird.

### Bezugszeichenliste

- 10: Versorgungssystem
- 11: Schreibmittel
- 12: Behälter
- 13: Behälter
- 14: Behälter
- 15: Behälter
- 16: Auftragselement
- 17: Zuführungseinrichtung
- 18: Auslaßöffnung
- 19: Verbindungsleitung
- 20: Einlaßöffnung
- 21: kapillare Rinne
- 22: Behälterraum im Bereich der Einlaß- und Auslaßöffnung
- 23: Lufteinlaßleitung
- 24: kapillarer Speicher
- 25: Durchflußbegrenzer
- 26: kapillarer Speicher
- 27: Schreib-, Zeichen-, Mal- und Druckgerät oder dergleichen
- 28: Austrittsöffnung
- 29: Stopfen

## Patentansprüche

1. Versorgungssystem (10) für mit Hilfe von Kapillarkräften arbeitende Schreib- und Zeichengeräte zum Auftragen von Flüssigkeiten, umfassend eine Mehrzahl von gegenüber der Atmosphäre geschlossenen Behältern (12,13,14,15), die jeweils eine Einlaßöffnung (20) und eine Auslaßöffnung (18) aufweisen, zur Aufnahme der Schreib- und Zeichenflüssigkeit (11), wobei die Behälter (12,13,14,15) in einer Reihenschaltung über die an einem Behälter (12,13,14) ausgebildete Auslaßöffnung (18) mit der an einem folgenden Behälter (13,14,15) ausgebildeten Einlaßöffnung (20) in Verbindung stehen, ein mit dem letzten Behälter (15) der Reihenschaltung über eine Zuführeinrichtung (17) verbundenes, für den Auftrag der Flüssigkeit geeignetes Auftragselement (16), wie eine Schreib- oder Zeichenspitze, welches Auftragselement ohne weitere Hilfsmittel dann und nur dann Flüssigkeit auf einen Aufzeichnungsträger aufträgt, wenn es in Kontakt mit diesem gebracht wird und eine Bewegung relativ zu diesem ausführt und welches Auftragselement eine Austrittsöffnung (28) aufweist und einen mit dem ersten Behälter (12) der Reihenschaltung verbundenen Lufteinlaß, und daß die Einlaßöffnungen (20) und die Auslaßöffnungen (18) kapillar ausgebildet sind, wobei die Kapillarität der Einlaßöffnungen (20) und der Auslaßöffnungen (18) größer als die der Behälter (12,13,14,15) im Bereich der Einlaßöffnungen (20) und der Auslaßöffnungen (18) und kleiner als die der Austrittsöffnung (28) des Auftragelements (15) ist, dadurch gekennzeichnet, daß die Einlaßöffnungen (20) und die Auslaßöffnungen (18) der Behälter (12,13,14,15) im unteren Bereich (22) jedes Behälters (12,13,14,15), bezogen auf die Betriebsstellung des Gerätes, angeordnet sind.

2. Versorgungssystem nach Anspruch 1, dadurch gekennzeichnet, daß die Behälter (12,13,14,15), bezogen auf die Betriebsstellung der Geräte, ganz oder teilweise im wesentlichen rohrförmig nebeneinander angeordnet sind.

3. Versorgungssystem nach einem oder beiden der Ansprüche 1 oder 2, dadurch gekennzeichnet, daß die Behälter (12,13,14,15) wenigstens eine kapillare Rinne (21) enthalten, die die Behälter (12,13,14,15) bis in den Bereich der Auslaßöffnungen (18) durchquert, und deren Kapillarität höher als die Kapillarität der Behälter (12,13,14,15) ist.

4. Versorgungssystem nach einem oder mehreren der Ansprüche 1 bis 3, dadurch gekennzeichnet, daß eine Lufteinlaßleitung (23) zu einem ersten Behälter (12) der Mehrzahl der Behälter (12,13,14,15) vorgesehen ist, die mit einem kapillaren Speicher (24) verbunden ist.

5. Versorgungssystem nach einem oder mehreren der Ansprüche 1 bis 4, dadurch gekennzeichnet, daß wenigstens zwischen zwei Behältern (12,13,14,15) ein kapillarer Speicher eingefügt ist.

6. Versorgungssystem nach einem oder mehreren der Ansprüche 1 bis 5, dadurch gekennzeichnet, daß die Zuführeinrichtung (17) mit einem kapillaren Speicher (26) verbunden ist.

7. Versorgungssystem nach einem oder mehreren der Ansprüche 1 bis 6, dadurch gekennzeichnet, daß die Zuführeinrichtung (17) eine den Durchfluß begrenzende Einrichtung (25) aufweist.

8. Versorgungssystem nach Anspruch 7, dadurch gekennzeichnet, daß die den Durchfluß begrenzende Einrichtung (25) ein Ventil ist.

9. Versorgungssystem nach einem oder mehreren der Ansprüche 1 bis 8, dadurch gekennzeichnet, daß die Behälter (12,13,14,15) axial im wesentlichen in Form von Segmenten eines Kreises oder eines Vielecks angeordnet sind.

10. Versorgungssystem nach einem oder mehreren der Ansprüche 1 bis 9, dadurch gekennzeichnet, daß die Einlaßöffnungen (20) und die Auslaßöffnungen (18) in einem die Behälter (12,13,14,15) verschließenden Stopfen (29) ausgebildet sind.

11. Versorgungssystem nach einem oder mehreren der Ansprüche 1 bis 10, dadurch gekennzeichnet, daß eine Verbindungsleitung (19), die die Austrittsöffnung (18) des einen Behälters (12,13,14,15) mit der Austrittsöffnung (20) des anderen Behälters (12,13,14,15) verbindet, in einem die Behälter (12,13,14,15) verschließenden Stopfen (29) ausgebildet ist.

12. Versorgungssystem nach einem oder mehreren der Ansprüche 4 bis 11, dadurch gekennzeichnet, daß die Lufteinlaßleitung (23) in einem die Behälter (12,13,14,15) verschließenden Stopfen (29) ausgebildet ist.

13. Versorgungssystem nach einem oder mehreren der Ansprüche 5 bis 12, dadurch gekennzeichnet, daß der zwischen zwei Behältern (12,13,14,15) eingefügte kapillare Speicher in einem die Behälter (12,13,14,15) verschließenden Stopfen (29) ausgebildet ist.

14. Versorgungssystem nach einem oder mehreren der Ansprüche 4 bis 13, dadurch gekennzeichnet, daß der mit der Lufteinlaßleitung (23) verbundene kapillare Speicher (24) in einem die Behälter (12,13,14,15) verschließenden Stopfen (29) ausgebildet ist.

15. Versorgungssystem nach einem oder mehreren der Ansprüche 6 bis 14, dadurch gekennzeichnet, daß der mit der Zuführeinrichtung (17) verbundene Speicher (26) in einem die Behälter (12,13,14,15) verschließenden Stopfen (29) ausgebildet ist.

16. Versorgungssystem nach einem oder mehreren der Ansprüche 1 bis 15, dadurch gekennzeichnet, daß die Zuführungseinrichtung (17) in einem die Behälter (12,13,14,15) verschließenden Stopfen (29) ausgebildet ist.

17. Versorgungssystem nach einem oder mehreren der Ansprüche 7 bis 16, dadurch gekennzeichnet, daß die den Durchfluß begrenzende Einrichtung (25) in einem die Behälter (12,13,14,15) verschließenden Stopfen (29) ausgebildet ist.

## Claims

1. A supply system (10) for writing and drawing apparatus operating with the assistance of capillary forces for the application of liquids, the system comprising: a plurality of containers (12, 13, 14, 15) sealed off from the atmosphere, each having an inlet opening (20) and an outlet opening (18) for receiving the writing and drawing liquid (11), the containers (12, 13, 14, 15) being series connected via the outlet opening (18) provided on one container (12, 13, 14) to the inlet opening (20) provided on a following container (13, 14, 15); and an applicator element (16) suitable for applying the liquid, such as a writing or drawing tip, which is connected via a supply device (17) to the last container (15) of the series connection, and which, without any further assistance, applies liquid to the recording medium when and only when it is brought into contact with, and executes a movement relative to, that medium; this applicator element being provided with a discharge opening (28) and an air inlet connected to the first container (12) of the series connection, whereby the inlet openings (20) and outlet openings (18) are constructed in capillary form, the capillarity of the inlet openings (20) and outlet openings (18) being higher than that of the containers (12, 13, 14, 15) in the region of the inlet openings (20) and outlet openings (18) and lower than that of the discharge opening (28) of the applicator element (15), characterised in that the inlet openings (20) and outlet openings (18) of the containers (12, 13, 14, 15) are disposed in the lower region (22) of each container (12, 13, 14, 15) in relation to the operating position of the apparatus.

2. A supply system according to claim 1, characterized in that referred to the operating position of the apparatuses, the containers (12, 13, 14, 15) are wholly or partially disposed substantially in the form of tubes one beside the other.

3. A supply system according to one or both of claims 1 or 2, characterized in that the containers (12, 13, 14, 15) comprise at least one capillary channel (21) which extends through the containers (12, 13, 14, 15) as far as the zone of the outlet openings (18) and whose capillarity is higher than the capillarity of the containers (12, 13, 14, 15).

4. A supply system according to one or more of claims 1 to 3, characterized in that an air inlet line (23) which extends to a first container (12) of the plurality of containers (12, 13, 14, 15) is connected to a capillary reservoir (24).

5. A supply system according to one or more of claims 1 to 4, characterized in that a capillary reservoir is inserted at least between two containers (12, 13, 14, 15).

6. A supply system according to one or more of claims 1 to 5, characterized in that the supply device (17) is connected to a capillary reservoir (26).

7. A supply system according to one or more of claims 1 to 6, characterized in that the supply device (17) has a flow-limiting device (25).

8. A supply system according to claim 7, characterized in that the flow-limiting device (25) is a valve.

9. A supply system according to one or more of claims 1 to 8, characterized in that the containers (12, 13, 14, 15) are disposed axially substantially in the form of segments of a circle or polygon.

10. A supply system according to one or more of claims 1 to 9, characterized in that the inlet openings (20) and the outlet openings (18) are provided in a plug (29) which closes the containers (12, 13, 14, 15).

11. A supply system according to one or more of claims 1 to 10, characterized in that a connecting line (19), which connects the outlet opening (18) of one container (12, 13, 14, 15) to the inlet opening (20) of the other container (12, 13, 14, 15), is provided in a plug (29) which closes the containers (12, 13, 14, 15).

12. A supply system according to one or more of claims 4 to 11, characterized in that the air inlet line (23) is provided in a plug (29) which closes the containers (12, 13, 14, 15).

13. A supply system according to one or more of claims 5 to 12, characterized in that the capillary reservoir inserted between two containers (12, 13, 14, 15) is provided in a plug (29) which closes the containers (12, 13, 14, 15).

14. A supply system according to one or more of claims 4 to 13, characterized in that the capillary reservoir (24) connected to the air inlet line (23) is provided in a plug (29) which closes the containers (12, 13, 14, 15).

15. A supply system according to one or more of claims 6 to 14, characterized in that the accumulator (26) connected to the supply device (17) is provided in a plug (29) which closes the containers (12, 13, 14, 15).

16. A supply system according to one or more of claims 1 to 15, characterized in that the supply device (17) is provided in a plug (29) which closes the containers (12, 13, 14, 15).

17. A supply system according to one or more of claims 7 to 16, characterized in that the flow-limiting device (25) is provided in a plug (29) which closes the containers (12, 13, 14, 15).

## Revendications

1. Système d'alimentation (10) pour des enregistreurs automatiques et des traceurs de courbes qui travaillent à l'aide de forces capillaires pour le dépôt de liquides, comprenant un grand nombre de réservoirs (12, 13, 14, 15) fermés vis-à-vis de l'atmosphère, qui présentent chacun une ouverture d'entrée (20) et une ouverture de sortie (18), pour recevoir le liquide d'enregistrement et de tracé (11), les réservoirs (12, 13, 14, 15) étant raccordés selon un montage en série par l'intermédiaire de l'ouverture de sortie (18), ménagée dans un réservoir (12, 13, 14), à l'ouverture d'entrée (20) ménagée dans un réservoir suivant (13, 14, 15), comportant un élément d'application (16) raccordé au dernier réservoir (15) du montage en série par l'intermédiaire d'un dispositif d'amenée (17) approprié pour le dépôt du liquide, comme une pointe d'écriture ou de de tracé, dont l'élément de dépôt dépose ensuite le liquide sans autre élément auxiliaire sur un support de d'enregistrement, lorsqu'il est mis en contact avec celui-ci, et effectue un mouvement par rapport à celui-ci, et lequel élément de dépôt présente une ouverture de sortie (28) et une entrée d'air raccordée au premier réservoir (12) du montage en série et en ce que les ouvertures d'entrée (20) et les ouvertures de sortie (18) sont agencées à présenter un effet capillaire, la capillarité des ouvertures d'entrée (20) et des ouvertures de sortie (18) étant supérieure à celle des réservoirs (12, 13, 14, 15) dans la zone des ouvertures d'entrée (20) et des ouvertures de sortie (18) et étant inférieure à celle de l'ouverture de sortie (28) de l'élément de dépôt (15), caractérisé en ce que les ouvertures d'entrée (20) et les ouvertures de sortie (18) des réservoirs (12, 13, 14, 15) sont disposées dans la partie inférieure (22) de chaque réservoir (12, 13 14, 15), par rapport à la position de fonctionnement de du dispositif.

2. Système d'alimentation selon la revendication 1, caractérisé en ce que, d'une manière rapportée à la position de fonctionnement des dispositifs, les réservoirs (12,13,14,15) sont disposés en totalité ou en partie côte-à-côte avec une configuration sensiblement tubulaire.

3. Système d'alimentation selon une ou les deux revendications 1 ou 2, caractérisé en ce que les réservoirs (12,13,14,15) contiennent au moins une rainure capillaire (21), qui traverse les réservoirs (12,13,14,15) jusque dans la zone des ouvertures de sortie (18) et dont la capillarité est supérieure à celle du réservoir (12,13,14,15).

4. Système d'alimentation selon une ou plusieurs des revendications 1 à 3, caractérisé en ce qu'il est prévu une conduite d'entrée d'air (23) aboutissant au premier réservoir (12) de la multiplicité des réservoirs (12,13,14,15) et qui est raccordée à un accumulateur capillaire (24).

5. Système d'alimentation selon une ou plusieurs des revendications 1 à 4, caractérisé en ce qu'un accumulateur capillaire est inséré au moins entre deux réservoirs (12,13,14,15).

6. Système d'alimentation selon une ou plusieurs des revendications 1 à 5, caractérisé en ce que le dispositif d'amenée (17) est raccordé à un accumulateur capillaire (26).

7. Système d'alimentation selon une ou plusieurs des revendications 1 à 6, caractérisé en ce que le dispositif d'amenée (17) possède un dispositif (25) qui limite le débit.

8. Système d'alimentation la revendication 7, caractérisé en ce que le dispositif (25), qui limite le débit, est une soupape.

9. système d'alimentation selon une ou plusieurs des revendications 1 à 8, caractérisé en ce que les réservoirs (12,13,14,15) sont disposés axialement essentiellement sous la forme de segments d'un cercle ou d'un polygone.

10. Système d'alimentation selon une ou plusieurs des revendications 1 à 9, caractérisé en ce que les ouvertures d'entrée (20) et les ouvertures de sortie (18) sont ménagées dans un bouchon (29) qui ferme les réservoirs (12,13,14,15).

11. Système d'alimentation selon une ou plusieurs des revendications 1 à 10, caractérisé en ce qu'une conduite de liaison (19), qui relie l'ouverture de sortie (18) d'un réservoir (12,13,14,15) à l'ouverture d'entrée (20) de l'autre réservoir (12,13,14,15), est ménagée dans un bouchon (29) qui ferme les réservoirs (12,13,14,15).

12. Système d'alimentation selon une ou plusieurs des revendications 4 à 11, caractérisé en ce que la conduite d'entrée d'air (22) est formée dans un bouchon (29) qui ferme les réservoirs (12,13,14,15).

13. Système d'alimentation selon une ou plusieurs des revendications 5 à 12, caractérisé en ce que l'accumulateur capillaire inséré entre deux réservoirs (12,13,14,15) est formé dans un bouchon (29) qui ferme les réservoirs (12,13,14,15).

14. Système d'alimentation selon une ou plusieurs des revendications 4 à 13, caractérisé en ce que l'accumulateur capillaire (24), qui est raccordé à la conduite d'entrée d'air (23), est formée dans un bouchon (29) fermant les réservoirs (12,13,14,15).

15. Système d'alimentation selon une ou plusieurs des revendications 6 à 14, caractérisé en ce que l'accumulateur (26) raccordé au dispositif d'amenée (17) est formé dans un bouchon (29) fermant les réservoirs (12,13,14,15).

16. Système d'alimentation selon une ou plusieurs des revendications 1 à 15, caractérisé en ce que le dispositif d'amenée (17) est formé dans un bouchon (29) fermant les réservoirs (12,13,14,15).

17. Système d'alimentation selon une ou plusieurs des revendications 7 à 16, caractérisé en ce que le dispositif (25), qui limite le débit, est réalisé dans un bouchon (29) qui ferme les réservoirs (12,13,14,15).
